# EUROPEAN PATENT SPECIFICATION

(11) **EP 2 347 069 B1**
(45) Date of publication and mention of the grant of the patent: **07.03.2018**
(21) Application number: 09737393.0
(22) Date of filing: 14.10.2009
(51) Int. Cl.: E05B 47/06

(54) **APPARATUS FOR DOCKING A MOBILE ROBOT TO A WORKING STATION**
VORRICHTUNG ZUM ANDOCKEN EINES MOBILEN ROBOTERS AN EINE ARBEITSSTATION
DISPOSITIF POUR AMARRER UN ROBOT MOBILE À UNE MACHINE

(30) Priority: 17.10.2008 SE 0802217
(43) Date of publication of application: 27.07.2011
(73) Proprietor: OpiFlex Automation AB, 721 30 Västeras (SE)
(72) Inventor: REYIER, Ingemar, 723 55 Västerås (SE); NYGREN, Peter Joakim, 732 47 Arboga (SE)
(74) Representative: Reyier, Ann-Mari
(86) International application number: PCT/EP2009/063389
(87) International publication number: WO 2010/043640

(56) References cited:
- DE-A1- 4 428 427
- DE-A1- 10 322 160
- FR-A1- 2 645 575
- US-A- 5 280 431

## Description

### FIELD OF THE INVENTION

The present invention relates to a industrial robot system for executing work at at least one work station, wherein the industrial robot system comprises at least one docking station arranged at the work station, a platform that carries a robot unit, wherein the platform is movable to the docking station, a connection device adapted to connect the platform to the docking station, wherein the connection device comprises a primary connection unit on the platform and a secondary connection unit on the docking station.

### PRIOR ART

In many small factories the manufacturing is done in small batches. The manufacturing is done at different work stations that comprise one or more installed machines. Which one of the work stations that is used at the moment depends on which type of detail that is manufactured. Accordingly different machines are used in different time periods. A time period can vary from a couple of hours to several weeks. The manufacturing can many times be facilitated and accelerated if one industrial robot unit is used for serving the machine. It is often not economically justified to install one robot unit at each machine. Thus, there is a need for a simple way of moving a robot unit between different work stations in the room for in that way receive an optimal use of the robot unit.

In order to improve the degree of use of the robot unit the robot unit is placed on a movable platform, a so called Automatic Guided Vehicle (AGV), that possesses means for moving between different work stations and connect to at least one docking station positioned at each work station. Through the connection to the docking station the platform is fixed at the docking station in a certain position. The robot unit is positioned in a certain position on the platform. Thereby the robot unit is arranged in a certain position at the work station and relative to one or more machines at the work station. The certain position is important for the robot unit to be able to perform complex operations such as welding, glueing, painting, grinding, deburring, picking, assembling, etcetera, at the work station.

The displacement of the platform to the docking station at each work station is done by means of navigating the platform with an external navigation system, such as a visual navigation system or a navigation system based on dead reckoning. Alternatively there is a transmitter placed at the working floor so that the platform is guided to the docking station of interest. The platform is provided with batteries for powering its movements around the path and for providing electric power to the robot unit's motors. A node is defined for the docking station at each work station and for each position in the factory where the platform is intended to be stopped, for example service areas, battery charging stations or similar positions. The platform is free to move between the work stations and to move from node to node.

In known industrial robot system the platform is connected and fixed at the docking station in a certain position by means of that the platform is lifting itself by means of a lifting device. For example the lifting device contains three protruding lifting legs that lift the platform towards three stops on the docking station. The lifting device extends outside the sides of the platform for creating a rigid fixation of the platform. Thereby the platform is fixed in a certain position that is not effected by the work of the robot unit at the work station.

A problem with such connection of the platform to the docking station is that the lifting device is requiring space around the work station. Even when the platform is not connected to the docking station the lifting device demands space around the work station. Furthermore components of the lifting device and the stops on the docking station protrude out from the docking station. These protruding components create an working environment that is not suitable for an operator to work in. This results in that the machines at such a docking station can not be used for smaller production batches, wherein an operator serves the machine at the work station. A further problem is that the lifting device demands a great number of components that add costs to the industrial robot system.

From the American patent US 5280431 it is known with a robot unit that moves along a plurality of predefined paths between a plurality of work stations. Along the path the robot unit stops at the different work stations and executes varies types of work at each work station, such as delivering working material to the work station or collecting ready-made or partly ready parts from the work station.

### OBJECTS AND SUMMARY OF THE INVENTION

The object of the present invention is to provide an improved industrial robot system for executing work at at least one work station.

This object is achieved with an industrial robot system defined by claim 1, characterized in that the connection device comprises:
a first protruding member that protrudes out from one of the primary and secondary connection unit,
a first space at the other of the primary and the secondary connection unit, wherein the first space is adapted to receive the first protruding member that is insertable in the first space in a connecting direction,
a locking device adapted to provide locking of the platform to the docking station when the first protruding member is inserted in the first space, wherein the locking device comprises a locking member and a receiving member, wherein the locking member is arranged on one of the primary and the secondary connection unit and the receiving member is arranged on the other of the primary and the secondary connection unit,
a power unit adapted to, when the first protruding member is inserted in the first space, exert a force that is directed in the connecting direction and that by means of locking device presses the platform towards the docking station, wherein the platform is fixed at the docking station in a certain position.

The platform is movable to and from the docking station. By the connection device the platform is arranged to be connected to the docking station by means of a primary connection unit on the platform and a secondary connection unit on the docking station. The first protruding member is arranged to be inserted in the first space in a connecting direction, wherein a locking device is arranged to create a locking that connects the platform and the docking station. The power unit is arranged to by means of the locking device exert a force that is mainly directed in the connecting direction so that the platform if possible is moved a short distance towards the docking station and so that the platform and the docking station are pressed together in a certain position to a stable connection. By the stable connection between the platform and the docking station, the certain position of the platform at the docking station will not be effected by the work of the robot unit at the work station.

According to an embodiment of the invention the locking device is arranged to engage with the receiving member so that the first protruding member is locked in a certain position in the first space.

During locking by means of the locking device the first protruding member's inserted position in the first space is mainly constant. The term "engage" refers to that the locking member and the receiving member encounter each other so that a locking is achieved. The locking can for example be created by means of a flange entering a groove, a locking pin entering a hole, etcetera.

According to an embodiment of the invention the receiving member is arranged on the first protruding member.

According to an embodiment of the invention the receiving member comprises a recess, wherein the locking member comprises a locking bar, wherein the recess is adapted to receive the locking bar.

According to an embodiment of the invention the platform is arranged to be moved to the docking station mainly in a first plane, wherein the connecting direction is parallel with the first plane.

According to an embodiment of the invention the primary connection unit has a primary contact surface and the secondary connection unit has a secondary contact surface, wherein the primary contact surface and the secondary contact surface is in contact with each other in the certain position.

The primary contact surface and the secondary contact surface are arranged to be in contact with each other when the platform and the docking station are connected to each other. The contact surfaces are arranged to encounter each other in the certain position so that a stable connection is achieved between the platform and the docking station.

According to an embodiment of the invention one of the primary and the secondary connection unit comprises at least one second protruding member adapted to be guided into a second space at the other of the primary and the secondary connection unit, wherein the platform is guided to a lockable position at the docking station.

According to one embodiment of the invention one of the primary and the secondary connection unit comprises at least a third protruding member that is arranged to be inserted in a third space, wherein the first, the second and the third protruding member and the first, second and the third spaces extend parallel with the connecting direction.

According to an embodiment of the invention the first protruding member, the second protruding member and the third protruding member are positioned so that they set up a second plane that is mainly perpendicular to the connecting direction so that the connection between the platform and the docking station is stable in the certain position.

According to an embodiment of the invention the second plane is parallel with the primary and the secondary contact surface, at least when the platform is fixed at the docking station in the certain position.

According to an embodiment of the invention the power unit is adapted to be provided with energy for creating mentioned exerted force, wherein the power unit comprises a self-locking mechanism that is arranged to maintain mentioned exerted force without providing further energy to the power unit. The self-locking mechanism can for example comprise a self-locking screw which position and exerting force are mainly changed by means of a change induced by the power unit.

According to an embodiment of the invention a control unit is adapted to transmit control signals to the power unit so that the exerted force of the power unit is controllable, wherein the control unit is adapted to control the connection between the platform and the docking station.

According to an embodiment of the invention the control unit is adapted to transmit control signals to the locking device so that the locking of the locking device is controllable.

According to an embodiment of the invention the industrial robot system comprises a plurality of docking stations that each comprises a secondary connection unit.

### BRIEF DESCRIPTION OF THE DRAWINGS

The invention will now be explained closer by a description of the different embodiments of the invention and with reference to the appended figures.
Figure 1a-c show an example of the invention comprising a connection device for an industrial robot system.

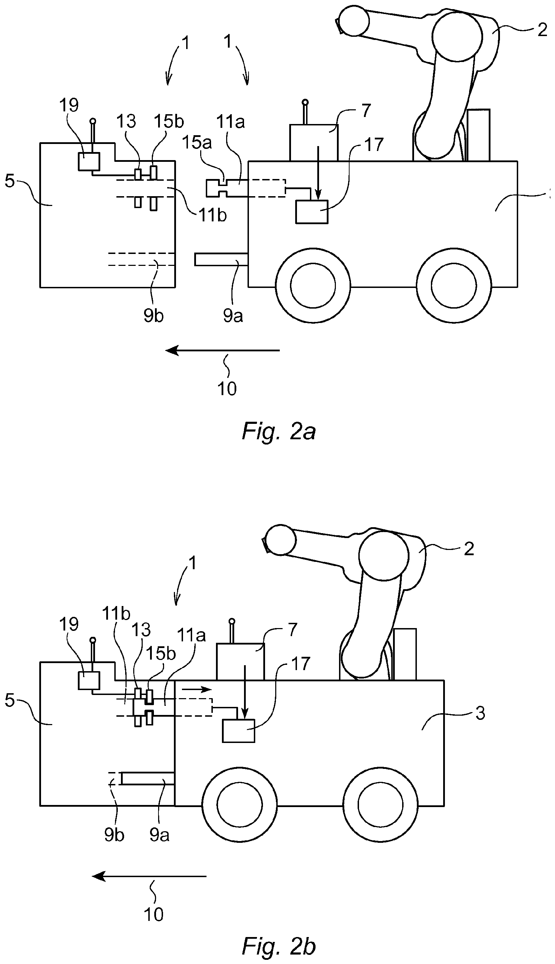

Figure 2a shows an example of the invention comprising a cross-section of an connection device where the platform and the docking station are in an non-connected position.
Figure 2b shows an example of the invention comprising a cross-section of a connection device where the platform and the docking station are in a connected position.

### DETAILED DESCRIPTION OF PREFERRED EMBODIMENTS OF THE INVENTION

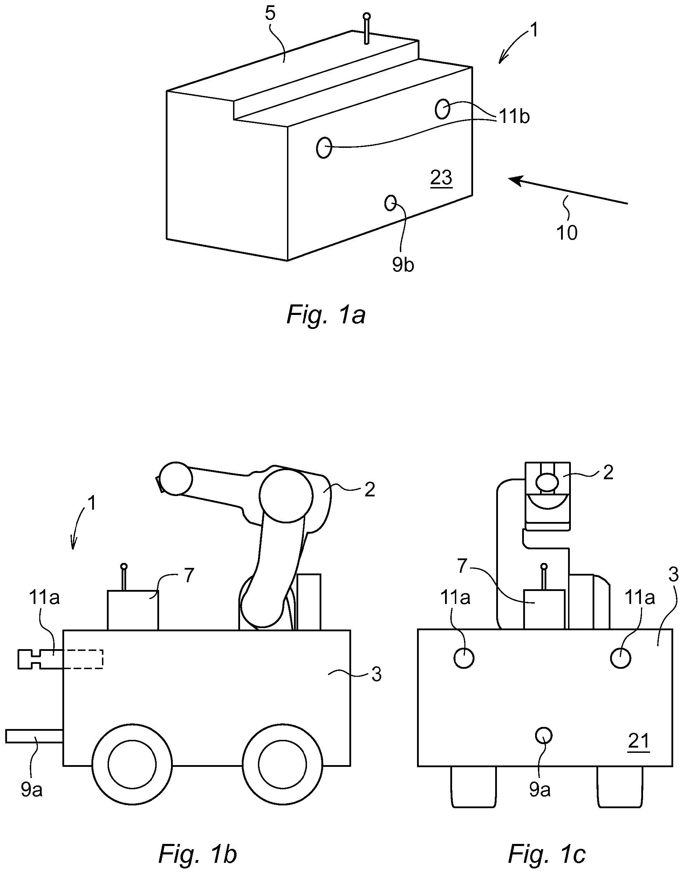

The figures illustrate a part of an industrial robot system including one or more work stations (not showed) each having its docking station 5 and a platform 3. Figure 1a shows a docking station 5 arranged at a work station. In figure 1b a side view of a platform 3 that carries a robot unit 2 is shown. The platform 3 is moveable so that it is adapted to be moved to the docking station 5. The robot unit 2 is adapted to execute work at the work station when the platform 3 is connected to the docking station 5. In figure 1c the platform 3 is shown from a front view.

The docking station 5 in figure 1a and the platform 3 in figure 1b respectively figure 1c is arranged to be connected to each other so that the platform 3 is pressed towards the docking station 5, wherein the platform 3 is fixed at the docking station 5 in a certain position.

The industrial robot system comprises a connection device 1 that is arranged to connect the platform 3 at the docking station 5 in a connecting direction 10. The connection device 1 comprises a primary connection unit on the platform 3 and a secondary connection unit on the docking station 5. The primary connection unit has a primary contact surface 21 and the secondary connection unit has a secondary contact surface 23. During connecting the platform 3 to the docking station 5 the primary contact surface 21 is arranged to encounter the secondary contact surface 23 so that the contact surfaces 21, 23 are in contact in the certain position.

The platform 3 has three protruding members 11a, 9a, 11a that protrude out from the side of the platform 3. The protruding members 11a, 9a, 11a comprise a first protruding member 11a, a second protruding member 9a and a third protruding member 11a. The docking station 5 comprises three spaces 11b, 9b, 11b. The spaces 11b, 9b, 11b comprise a first space 11b, a second space 9b and a third space 11b. The first space 11b, the second space 9b and the third space 11b are adapted to receive the first protruding member 11a respectively the second protruding member 9a respectively the third protruding member 11a in a connecting direction 10 so that the first protruding member 11a and the third protruding member 11a are inserted to a lockable position in the first space 11b respectively the third space 11b. At the lockable position a locking is permitted by the first protruding member 11a respectively the third protruding member 11a to the docking station 5. During locking a power unit 17 is arranged to by the locking press the platform 3 towards the docking station 5 so that the platform 3 is fixed at the docking station 5 in the certain position.

The secondary connection unit comprises a locking device 15 that is arranged to provide locking of the platform 3 at the docking station 5, when the protruding members 11a, 11a are inserted in the spaces 11b, 11b in a lockable position. In the lockable position a locking device 15 is arranged to lock the inserted position of the first protruding member 11a and the third protruding member 11a in the first space 11b respective the third space 11b so that the inserted position of the protruding member 11a, 11a mainly is constant. The locking device 15 comprises a locking member 15b at each of the first space 11b and the third space 11b. The locking member 15b is arranged to engage with a receiving member 15a at each of the first protruding member 11a and the third protruding member 11a. The receiving member 15a has a recess such as a groove, a hole, an indent, etcetera. The locking member 15b comprises a locking bar such as a flange, a locking pin, a locking nail, etcetera. The recess is arranged to receive the locking bar so that the locking device 15 is locked.

A power unit 17 is arranged during a locking of a first protruding member 11a and the third protruding member 11a to exert a force by the locking device 15 so that the power unit 17 presses the platform 3 towards the docking station 5, wherein the platform 3 if possible is moved towards the docking station 5 a short distance so that the primary contact surface 21 on the platform 3 is displaced to contact with the secondary contact surface 23 on the docking station 5, wherein the primary contact surface 21 and the secondary contact surface 23 are in contact with each other in the certain position. For example a spacer with a well-defined thickness is arranged at each of the protruding members 11a, 9a, 11a. Thereby a well-defined contact between the primary contact surface 21 and the secondary contact surface 23 is achieved during connection between the platform 3 and the docking station 5.

The first protruding member 11a, the second protruding member 9a and the third protruding member are positioned on the platform 3 so that they set up a second plane that is mainly perpendicular to the connecting direction 10. The second plane is parallel with the primary and the secondary contact surface 21, 23, at least when the platform 3 is fixed at the docking station 5 in the certain position. Thereby the platform 3 is fixed to a stable certain position at the docking station 5.

The second protruding member 9a lacks locking device 15 and can thereby not be locked to the docking station 5. The function of the second protruding member 9a is to introduce the guidance of the platform 3 in the connecting direction 10 so that the first protruding member 11a and the third protruding member 11a are inserted to a lockable position in the first space 11b and the third space 11b.

The platform 3 has a control unit 7 that is arranged to control the connection between the platform 3 and the docking station 5. The docking station 5 has a signal unit 19 that is arranged to receive control signals from the control unit 7. Furthermore the signal unit 19 is arranged to transmit signals to the locking device 15 and to receive signals from position transmitters 13 at each of the first space 11a and the third space 11a.

The control unit 7 is configured to transmit control signals to a power unit at the platform 3 that moves the platform 3 to the docking station 5. At the connection of the platform 3 to the docking station 5 the platform 3 is moved in the connecting direction 10 to a position where the second space 11b receives the second protruding member 9a so that the first protruding member 11a and the third protruding member 11a are guided into the first space 11b and the third space 11b to a lockable position. The control unit 7 transmits control signals until that the protruding members 11a, 11a are inserted in the lockable position. The lockable position can for example be indicated by means of a position transmitter 13 at the spaces 11b, 11b that transmits a stop signal to the control unit 7 by means of the signal unit 19 at the docking station 5.

The control unit 7 is configured to transmit a control signal to the locking device 15 when the protruding members 11a, 11a are inserted in a lockable position in the spaces 11b, 11b. At the reception of the control signal the locking members 15b, 15b are in engagement with the receiving members 15a, 15a so that a locking is created between the protruding members 11a, 11a and the docking station 5.

The control unit 7 is configured at the locking between the protruding members 11a, 11a and the locking station 5 to transmit a control signal to the power unit 17 so that the power unit 17 induces a force in the connecting direction 10 through the locking device 15 that presses the platform 3 towards the docking station 5 in the certain position.

In another embodiment of the invention the receiving members 15a, 15a are arranged at the first space 11b and the third space 11b. A locking member 15b is arranged on the first protruding member 11a and the third protruding member 11a. For example each locking member 15b comprises a locking pin that at locking protrudes out from the protruding members 11a, 11a. By this embodiment, it is possible to design the docking station 5 as a passive unit that by means of the spaces 11b, 9b, 11b receive the protruding members 11a, 9a, 11a and at a locking receive the locking members 15b, 15b from the first protruding member 11a and the third protruding member 11a so that the platform 3 is locked at the docking station 5. Thereafter the power unit 17 induces a force that presses the platform 3 towards the docking station 5 at the certain position. The control unit 7 transmits all control signals to the components positioned at the platform 3. Thereby the design of the industrial robot system is simplified.

In another embodiment of the invention the function of all the protruding members 11a, 9a, 11a are to guide the platform 3 into the space 11b so that the platform 3 is guided in a lockable position in the docking station 5. The locking of the platform 3 to the docking station 5 is done independently from the protruding members 11a, 9a, 11a. For example the locking device 15 is positioned on the upper side of the platform 3 respectively the docking station 5 so that a locking member 15b on the platform 3 engages the respective receiving member 15a on the docking station 5. The power unit 17 induces a force acting by the locking device 15 in the connecting direction 10 so that the platform 1 is fixed at the docking station 5 in the certain position.

The invention is not limited to the presented embodiments but may be modified and varied within the scope of the following claims.

## Claims

1. An industrial robot system for executing work at at least one work station, wherein the industrial robot system comprises:
at least one docking station (5) arranged at the work station,
a platform (3) that carries a robot unit (2), wherein the platform (3) is movable to the docking station (5),
a connection device (1) adapted to connect the platform (3) to the docking station (5), wherein the connection device (1) comprises a primary connection unit on the platform (3) and a secondary connection unit on the docking station (5), a first protruding member (11a) that protrudes out from one of the primary and the secondary connection unit,
a first space (11b) at the second of the primary and the secondary connection unit, wherein the first space (11b) is adapted to receive the first protruding member (11a) that is insertable in the first space (11b) in a connecting direction (10),
a locking device (15) adapted to permit locking of the platform (3) to the docking station (5) when the first protruding member (11a) is inserted in the first space (11b), wherein the locking device (15) comprises a locking member (15b) and a receiving member (15a), wherein the locking member (15b) is arranged on one of the primary and the secondary connection unit and the receiving member (15a) is arranged on the other of the primary and the secondary connection unit, **characterized in that** the connection device (1) comprises: a power unit (17) arranged to, when the first protruding member (11a) is inserted in the first space (11b), exert a force that is directed in the connecting direction (10) and that by the locking device (15) presses the platform (3) towards the docking station (5), wherein the platform (3) is fixed at the docking station (5) in a certain position.

2. Industrial robot system according to claim 1, **characterized in that** the locking member (15b) is adapted at mentioned locking to engage with the receiving member (15a) so that the first protruding member (11a) is locked in an inserted position in the first space (11b).

3. Industrial robot system according to any of claim 1 and 2, **characterized in that** the receiving member (15a) is arranged on the first protruding member (11b).

4. Industrial robot system according to anyone of the preceding claims, **characterized in that** the receiving member (15a) comprises a recess, wherein the locking member (15b) comprises a locking bar, wherein a recess is arranged to receive the locking bar.

5. Industrial robot system according to anyone of the preceding claims, **characterized in that** the platform (3) is arranged to be moved to the docking station (5) mainly in a first plane, wherein the connecting direction (10) is parallel with the first plane.

6. Industrial robot system according to anyone of the preceding claims, **characterized in that** the primary connection unit has a primary contact surface (21) and that the secondary connection unit has a secondary contact surface (23), wherein the primary contact surface (21) and the secondary contact surface (23) is in contact with each other in the certain position.

7. Industrial robot system according to anyone of the preceding claims, **characterized in that** one of the primary and the secondary connection unit comprises at least one second protruding member (9a) configured to be guided into a second space (9b) at the other of the primary and the secondary connection unit, wherein the platform (3) is guided to a lockable position at the docking station (5).

8. Industrial robot system according to anyone of the preceding claims, **characterized in that** one of the primary and the secondary connection unit comprises at least a third protruding member (11a) that is arranged to be inserted in a third space (11b), wherein the first, the second and the third protruding member (11a, 9a, 11a) and the first, second and the third space (11b, 9b, 11b) extend parallel with the connecting direction (10).

9. Industrial robot system according to claim 7 and 8, **characterized in that** the first protruding member (11a), the second protruding member (9a) and the third protruding member (11a) are positioned so that they set up a second plane that is mainly perpendicular to the connecting direction (10).

10. Industrial robot system according to any of the previous claims, **characterized in that** the second plane is parallel with the primary and the secondary contact surface, at least when the platform (3) is fixed at the docking station (5) in the certain position.

11. Industrial robot system according to any of the previous claims, **characterized in that** the power unit (17) is adapted to be supplied with energy for creating mentioned exerting force, wherein the power unit (17) comprises a self-locking mechanism that is configured to maintain mentioned exerting force without providing further energy to the power unit (17).

12. Industrial robot system according to any of the previous claims, **characterized in that** a control unit (7) is adapted to transmit control signals to the power unit (17) so that the exerted force from the power unit (17) is controllable, wherein the control unit (7) is adapted to control the connection between the platform (3) and the docking station (5).

13. Industrial robot system according to anyone of the previous claims, **characterized in that** the control unit (7) is adapted to transmit control signals to the locking device (15) so that the locking of the locking device (15) is controllable.

14. Industrial robot system according to anyone of the previous claims, **characterized in that** the industrial robot system comprises a plurality of docking stations (5) that each comprises a secondary connection unit.

15. Industrial robot system according to anyone of the previous claims, **characterized in that** at least the first protruding member (11a) protrudes from the primary connection unit and at least the first space (11b) is arranged on the secondary connection unit.

## Patentansprüche

1. Industrielles Robotersystem zum Ausführen einer Arbeit an wenigstens einer Arbeitsstation, wobei das industrielle Robotersystem umfasst:
wenigstens eine Andockstation (5), die an der Arbeitsstation angeordnet ist,
eine Plattform (3), die eine Robotereinheit (2) trägt, wobei die Plattform (3) zu der Andockstation (5) hin bewegbar ist,
ein Anschlussgerät (1), das dazu ausgebildet ist, die Plattform (3) an die Andockstation (5) anzuschließen, wobei das Anschlussgerät (1) eine primäre Anschlusseinheit an der Plattform (3) und eine sekundäre Anschlusseinheit an der Andockstation (5) umfasst,
ein hervorstehendes Bauteil (11a), das aus einer der primären und der sekundären Anschlusseinheit hervorsteht,
einen ersten Raum (11b) an der zweiten der primären und der sekundären Anschlusseinheit, wobei der erste Raum (11b) dazu ausgebildet ist, das erste hervorstehende Bauteil (11a) aufzunehmen, dass in einer Anschlussrichtung (10) in den ersten Raum (11b) einführbar ist,
eine Verriegelungsvorrichtung (15), die dazu ausgebildet ist eine Verriegelung der Plattform (3) an der Andockstation (5) zu ermöglichen, wenn das erste hervorstehende Bauteil (11a) in den ersten Raum (11b) eingeführt ist, wobei die Verriegelungsvorrichtung (15) ein Verriegelungselement (15b) und ein Aufnahmeelement (15a) umfasst, wobei das Verriegelungselement (15b) an einer der primären und der sekundären Anschlusseinheit angeordnet ist und das Aufnahmeelement (15a) an der anderen der primären und sekundären Anschlusseinheit angeordnet ist,
**dadurch gekennzeichnet, dass** das Anschlussgerät (1) umfasst:
ein Antriebsaggregat (17) das dazu eingerichtet ist, wenn das erste hervorstehende Bauteil (11a) in den ersten Raum (11b) eingeführt ist, eine Kraft auszuüben, die in die Anschlussrichtung (10) gerichtet ist und die durch die Verriegelungsvorrichtung (15) die Plattform (3) zu der Andockstation (5) hin drückt, wobei die Plattform (3) in einer bestimmten Position an der Andockstation (5) fixiert ist.

2. Industrielles Robotersystem nach Anspruch 1, **dadurch gekennzeichnet, dass** das Verriegelungselement (15b) dazu ausgebildet ist, bei der erwähnten Verriegelung mit dem Aufnahmeelement (15a) in Eingriff zu kommen, so dass das erste hervorstehende Bauteil (11a) in einer eingeführten Position in dem ersten Raum (11b) verriegelt ist.

3. Industrielles Robotersystem nach einem der Ansprüche 1 und 2, **dadurch gekennzeichnet, dass** das Aufnahmeelement (15a) an dem ersten hervorstehenden Bauteil (11b) angeordnet ist.

4. Industrielles Robotersystem nach einem der vorhergehenden Ansprüche, **dadurch gekennzeichnet, dass** das Aufnahmeelement (15a) eine Aussparung umfasst, wobei das Verriegelungselement (15 b) einen Riegel umfasst, wobei eine Aussparung zur Aufnahme des Riegels angeordnet ist.

5. Industrielles Robotersystem nach einem der vorhergehenden Ansprüche, **dadurch gekennzeichnet, dass** die Plattform (3) dazu angeordnet ist, hauptsächlich in einer ersten Ebene zu der Andockstation (5) bewegt zu werden, wobei die Anschlussrichtung (10) parallel zur ersten Ebene verläuft.

6. Industrielles Robotersystem nach einem der vorhergehenden Ansprüche, **dadurch gekennzeichnet, dass** die primäre Anschlusseinheit eine primäre Kontaktoberfläche (21) aufweist und dass die sekundäre Anschlusseinheit eine sekundäre Kontaktoberfläche (23) aufweist, wobei die primäre Kontaktoberfläche (21) und die sekundäre Kontaktoberfläche (23) in der bestimmten Position in Kontakt miteinander stehen.

7. Industrielles Robotersystem nach einem der vorhergehenden Ansprüche, **dadurch gekennzeichnet, dass eine** der primären und der sekundären Anschlusseinheit wenigstens ein zweites hervorstehendes Bauteil (9a) umfasst, das dazu konfiguriert ist, an dem anderen der primären und der sekundären Anschlusseinheit in einen zweiten Raum (9b) geführt zu werden, wobei die Plattform (3) zu einer verriegelbaren Position an der Andockstation (5) geführt wird.

8. Industrielles Robotersystem nach einem der vorhergehenden Ansprüche, **dadurch gekennzeichnet, dass** eine der primären und der sekundären Anschlusseinheit wenigstens ein drittes hervorstehendes Bauteil (11a) umfasst, das dazu angeordnet ist, in einen dritten Raum (11b) eingeführt zu werden, wobei das erste, das zweite und das dritte hervorstehende Bauteil (11a, 9a, 11a) und der erste, der zweite und der dritte Raum (11b, 9b, 11b) sich parallel zur Anschlussrichtung (10) erstrecken.

9. Industrielles Robotersystem nach Anspruch 7 und 8, **dadurch gekennzeichnet, dass** das erste hervorstehende Bauteil (11a), das zweite hervorstehende Bauteil (9a) und das dritte hervorstehende Bauteil (11a) so positioniert sind, dass sie eine zweite Ebene bilden, die hauptsächlich senkrecht zu der Anschlussrichtung (10) verläuft.

10. Industrielles Robotersystem nach einem der vorhergehenden Ansprüche, **dadurch gekennzeichnet, dass** die zweite Ebene parallel zu der primären und der sekundären Kontaktoberfläche verläuft, wenigstens wenn die Plattform (3) an der Andockstation (5) in der bestimmten Position fixiert ist.

11. Industrielles Robotersystem nach einem der vorhergehenden Ansprüche, **dadurch gekennzeichnet, dass** das Antriebsaggregat (17) dazu ausgebildet ist, zur Erzeugung der erwähnten Kraftausübung mit Energie versorgt zu werden, wobei das Antriebsaggregat (17) einen Selbstverriegelungsmechanismus umfasst, der dazu konfiguriert ist, die erwähnte Kraftausübung aufrechtzuerhalten, ohne dem Antriebsaggregat (17) weitere Energie zuzuführen.

12. Industrielles Robotersystem nach einem der vorhergehenden Ansprüche, **dadurch gekennzeichnet, dass** eine Steuereinheit (7) dazu ausgebildet ist, dem Antriebsaggregat (17) Steuersignale zu übermitteln, so dass die von dem Antriebsaggregat (17) ausgeübte Kraft steuerbar ist, wobei die Steuereinheit (7) dazu ausgebildet ist, den Anschluss zwischen der Plattform (3) und der Andockstation (5) zu steuern.

13. Industrielles Robotersystem nach einem der vorhergehenden Ansprüche, **dadurch gekennzeichnet, dass** die Steuereinheit (7) dazu ausgebildet ist, Steuersignale an die Verriegelungsvorrichtung (15) zu übermitteln, so dass die Verriegelung der Verriegelungsvorrichtung (15) steuerbar ist.

14. Industrielles Robotersystem nach einem der vorhergehenden Ansprüche, **dadurch gekennzeichnet, dass** das industrielle Robotersystem eine Vielzahl von Andockstationen (5) umfasst, die jeweils eine sekundäre Anschlusseinheit umfassen.

15. Industrielles Robotersystem nach einem der vorhergehenden Ansprüche, **dadurch gekennzeichnet, dass** wenigstens das erste hervorstehende Bauteil (11a) von der primären Anschlusseinheit hervorsteht und wenigstens der erste Raum (11b) an der sekundären Anschlusseinheit angeordnet ist.

## Revendications

1. Système robotique industriel destiné à effectuer un travail sur au moins un poste de travail, le système robotique industriel comprenant :
au moins une station d'accueil (5) disposée au poste de travail,
une plateforme (3) qui porte une unité robotique (2), la plateforme (3) pouvant être déplacée vers la station d'accueil (5),
un dispositif de connexion (1) conçu pour connecter la plateforme (3) à la station d'accueil (5), le dispositif de connexion (1) comprenant une unité de connexion primaire sur la plateforme (3) et une unité de connexion secondaire sur la station d'accueil (5),
un premier élément saillant (11a) qui dépasse de l'une des unités de connexion primaire et secondaire,
un premier espace (11b) sur l'autre des unités de connexion primaire et secondaire, le premier espace (11b) étant conçu pour recevoir le premier élément saillant (11a) qui est insérable dans le premier espace (11b) dans une direction de connexion (10),
un dispositif de verrouillage (15) conçu pour permettre le verrouillage de la plateforme (3) sur la station d'accueil (5) lorsque le premier élément saillant (11a) est inséré dans le premier espace (11b), le dispositif de verrouillage (15) comprenant un élément de verrouillage (15b) et un élément récepteur (15a), l'élément de verrouillage (15b) étant disposé sur l'une des unités de connexion primaire et secondaire et l'élément récepteur (15a) étant disposé sur l'autre des unités de connexion primaire et secondaire,
**caractérisé en ce que** le dispositif de connexion (1) comprend :
une unité d'alimentation (17) disposée de manière à exercer une force, lorsque le premier élément saillant (11a) est inséré dans le premier espace (11b), la force étant dirigée dans la direction de connexion (10) et **en ce que** le dispositif de verrouillage (15) presse la plateforme (3) vers la station d'accueil (5), la plateforme (3) étant fixée à la station d'accueil (5) dans une certaine position.

2. Système robotique industriel selon la revendication 1, **caractérisé en ce que** l'élément de verrouillage (15b) est conçu au niveau dudit verrouillage pour entrer en prise avec l'élément récepteur (15a) de sorte que le premier élément saillant (11a) est verrouillé dans une position d'insertion dans le premier espace (11b).

3. Système robotique industriel selon l'une quelconque des revendications 1 et 2, **caractérisé en ce que** l'élément récepteur (15a) est disposé sur le premier élément saillant (11a).

4. Système robotique industriel selon l'une quelconque des revendications précédentes, **caractérisé en ce que** l'élément récepteur (15a) comprend un logement, l'élément de verrouillage (15b) comprenant une barre de verrouillage, un logement étant disposé pour recevoir la barre de verrouillage.

5. Système robotique industriel selon l'une quelconque des revendications précédentes, **caractérisé en ce que** la plateforme (3) est disposée afin d'être déplacée vers la station d'accueil (5) principalement dans un premier plan, la direction de connexion (10) étant parallèle au premier plan.

6. Système robotique industriel selon l'une quelconque des revendications précédentes, **caractérisé en ce que** l'unité de connexion primaire possède une surface de contact primaire (21) et **en ce que** l'unité de connexion secondaire possède une surface de contact secondaire (23), la surface de contact primaire (21) et la surface de contact secondaire (23) étant en contact l'une avec l'autre dans la certaine position.

7. Système robotique industriel selon l'une quelconque des revendications précédentes, **caractérisé en ce que** l'une des unités de connexion primaire et secondaire comprend au moins un deuxième élément saillant (9a) configuré pour être guidé dans un deuxième espace (9b) sur l'autre des unités de connexion primaire et secondaire, la plateforme (3) étant guidée vers une position verrouillable au niveau de la station d'accueil (5).

8. Système robotique industriel selon l'une quelconque des revendications précédentes, **caractérisé en ce que** l'une des unités de connexion primaire et secondaire comprend au moins un troisième élément saillant (11a) disposé de manière à être inséré dans un troisième espace (11b), le premier, le deuxième et le troisième élément saillant (11a, 9a, 11a) et le premier, le deuxième et le troisième espace (11b, 9b, 11b) s'étendant parallèlement à la direction de connexion (10).

9. Système robotique industriel selon les revendications 7 et 8, **caractérisé en ce que** le premier élément saillant (11a), le deuxième élément saillant (9a) et le troisième élément saillant (11a) sont placés de manière à définir un deuxième plan qui est principalement perpendiculaire à la direction de connexion (10).

10. Système robotique industriel selon l'une quelconque des revendications précédentes, **caractérisé en ce que** le deuxième plan est parallèle aux surfaces de contact primaire et secondaire, au moins lorsque la plateforme (3) est fixée à la station d'accueil (5) dans la certaine position.

11. Système robotique industriel selon l'une quelconque des revendications précédentes, **caractérisé en ce que** l'unité d'alimentation (17) est conçue pour recevoir de l'énergie afin de créer ladite force exercée, l'unité d'alimentation (17) comprenant un mécanisme d'autoverrouillage qui est configuré de manière à maintenir ladite force exercée sans que l'unité d'alimentation (17) ne reçoive d'énergie supplémentaire.

12. Système robotique industriel selon l'une quelconque des revendications précédentes, **caractérisé en ce qu'**une unité de commande (7) est conçue pour transmettre des signaux de commande à l'unité d'alimentation (17) de sorte que la force exercée par l'unité d'alimentation (17) peut être commandée, l'unité de commande (7) étant conçue pour commander la connexion entre la plateforme (3) et la station d'accueil (5).

13. Système robotique industriel selon l'une quelconque des revendications précédentes, **caractérisé en ce que** l'unité de commande (7) est conçue pour transmettre des signaux de commande au dispositif de verrouillage (15) de manière à pouvoir commander le verrouillage du dispositif de verrouillage (15).

14. Système robotique industriel selon l'une quelconque des revendications précédentes, **caractérisé en ce qu'**il comprend une pluralité de stations d'accueil (5) qui comprennent chacune une unité de connexion secondaire.

15. Système robotique industriel selon l'une quelconque des revendications précédentes, **caractérisé en ce qu'**au moins le premier élément saillant (11a) dépasse de l'unité de connexion primaire et au moins le premier espace (11b) est disposé sur l'unité de connexion secondaire.
